# EUROPEAN PATENT SPECIFICATION

(11) **EP 4 323 142 B1**
(45) Date of publication and mention of the grant of the patent: **15.10.2025**
(21) Application number: 21937119.2
(22) Date of filing: 24.12.2021
(51) Int. Cl.: B23K 26/03, B23K 26/02, B23K 26/38

(54) **SHEET PROCESSING MACHINE AND METHOD**
BOGENVERARBEITUNGSMASCHINE UND -VERFAHREN
MACHINE ET MÉTHODE DE TRAITEMENT DE TÔLES

(30) Priority: 12.04.2021 WO PCT/TR2021/006461
(43) Date of publication of application: 21.02.2024
(73) Proprietor: Durmazlar Makina Sanayi Ve Ticaret Anonim Sirketi, Nilüfer Bursa (TR)
(72) Inventor: SERIFOGLU, Feridun, Nilufer/Bursa (TR); KARANFIL, Ugur, Nilufer/Bursa (TR)
(74) Representative: Kaya, Erdem
(86) International application number: PCT/TR2021/051490
(87) International publication number: WO 2022/220765

(56) References cited:
- WO-A1-2020/064877
- US-A1- 2018 150 058
- US-A1- 2018 150 062
- US-A1- 2018 243 862
- US-A1- 2019 126 328
- US-A1- 2019 310 604

## Description

### TECHNICAL FIELD

The present invention relates to a sheet processing machine that enables cutting of a sheet plate using optical laser beams, and to a sheet processing method using such machine, see claims 1 and 7).

### PRIOR ART

Laser cutting machines direct the beam obtained from the laser source to the desired area by means of a laser cutting head containing a mirror or lens, and ensure that the material in said area is cut to the desired extent. The usage areas of laser machines are increasing day by day with the development of laser technology. The processes carried out with laser cutting machines used for shaping metal and non-metal materials save apparatus and mold. In addition, it is ensured that the error rate that occurs during shaping is reduced and the related production costs are reduced.

Edge point coordinate, size and angle information of the sheet plate to be cut is required before starting the cutting process in laser machines. The laser cutting head starts to process the workpiece according to the part program codes loaded on the machine by going to the coordinate specified as the first step of production. The fact that the position of the plate is not correct, measurement information on the angle or the aspect ratio is incorrect may cause the cutting head to go out of the sheet. Production cost, labor and time loss increase due to imperfect productions in this case.

There are manual or automatic sheet search systems that prevent the losses mentioned in the present art. One of the aforementioned systems is sending the sheet plate data to the machine by the movement of a laser cutting head containing a capacitive sensor on the sheet plate. The measurement values obtained from a certain number of measurement points on the sheet plate by means of the capacitive sensor are calculated by size, angle and edge with predetermined mathematical functions in the aforementioned system. The cutting head containing the capacitive sensor should be positioned on the sheet inside the machine in the aforementioned system. The data obtained depending on the position of the sheet plate does not give the exact size in some cases and said situation causes incorrect cutting. In addition, the fact that only one sheet having only specified sizes can be cut in the laser cutting machine in the existing systems causes unnecessary time loss. Another method used in the present art is that the cutting process is carried out according to the coordinate information received by the camera provided in the laser cutting machine. The fact that the camera is provided inside the machine may cause the image of the camera to be distorted due to the chips formed during cutting. This causes the operator to check the cleaning of the camera each time and causes unnecessary time loss and increased workload of the operator depending on the mentioned situation.

The WO patent document with number WO2020064877A1 (describing the preamble of claims 1 and 7) relates to a method that enables the placement of workpieces in a specific arrangement in flat-bed machine tools. Thus, the positioning of workpieces in the cutting process is organized. WO2020064877A1 document does not disclose a method that allows measuring the edge point coordinates, dimensions and angle information of the sheet metal before starting the laser cutting process.

The US patent document with number US2019126328A1 relates to a method enabling optimized coverage for selective laser ablation systems. Thus, three-dimensional surfaces can be more efficiently cleaned or processed using laser ablation. US2019126328A1 document does not disclose a method that allows measuring the edge point coordinates, dimensions and angle information of the sheet metal before starting the laser cutting process.

All the problems mentioned above have made it necessary to make an innovation in the related technical field as a result.

### BRIEF DESCRIPTION OF THE INVENTION

The present invention relates to a sheet processing machine in order to eliminate the above-mentioned disadvantages and to bring new advantages to the related technical field.

An object of the invention is to provide a sheet processing machine that enables the dimensions and the angle of curvature of the sheet plate to be cut to be determined and the coordinates to be cut to be determined correctly.

The present invention defines a sheet processing machine according to claim 1, the machine comprising a body for processing a sheet plate, a loading pallet for transporting into the body said sheet plate placed on it in connection with said body, a processing head for ensuring that the sheet plate on said loading pallet is processed in the body, in order to realize all the purposes that are mentioned below and will be understood from the following detailed description. Accordingly, its novelty is that it comprises at least one sensor unit placed on the body to ensure the superficial scanning of the sheet plate on the loading pallet, a processor unit configured to receive data from said sensor unit; the processor unit is configured to enable the superficial scanning of the sheet plate positioned on the loading pallet during its passage into the body by means of the sensor unit; to enable the analysis of the superficial scanning data received from the sensor unit; as a result of the analysis, to enable the determination of the coordinate information of the position of the sheet plate on the loading pallet, angle information and the dimensions of the sheet plate.

A possible embodiment of the invention is characterized in that the sensor unit comprises at least one image sensor.

A possible embodiment of the invention is characterized in that the sensor unit comprises at least one laser distance measurement sensor.

A possible embodiment of the invention is characterized in that it comprises a drive element controlling the movement of the loading pallet.

A possible embodiment of the invention is characterized in that the processor unit is configured to receive the position data of the loading pallet from a motion sensor to said drive element.

A possible embodiment of the invention is characterized in that the processor unit is configured to calculate a position data according to a reference element provided on the loading pallet to enable the position of the sheet plate on the loading pallet to be determined.

A sheet processing method according to the present invention is defined in claim 7, the method performing at least the following processing steps:
- Placing at least one sheet plate on the loading pallet,
- Transporting the sheet plate into the body by the loading pallet through the drive element,
- Superficial scanning the sheet on the loading pallet during its passage into the body by means of the sensor unit,
- Determining the lateral length, height of the sheet plate and its position, angle on the sheet plate during superficial scanning,
- Receiving a position data including the lateral length, height and position, angle of the sheet plate on the loading pallet from the sensor unit through the processor unit,
- Analyzing said position data received from the sensor unit through the processor unit,
- Determining the position to be processed on the sheet plate according to the result of the analysis.

A possible embodiment of the invention is characterized in that it comprises the step of receiving vertical position data on the loading pallet of the sheet plate from the motion sensor through the processor unit between the step of receiving a position data including the lateral length, height and position, angle of the sheet plate on the loading pallet from the sensor unit through the processor unit and the step of analyzing said position data received from the sensor unit through the processor unit.

A possible embodiment of the invention is characterized in that it comprises the step of calculating the vertical position data of the sheet plate on the loading pallet according to the reference element through the processor unit between the step of receiving a position data including the lateral length, height and position, angle of the sheet plate on the loading pallet from the sensor unit through the processor unit and the step of analyzing said position data received from the sensor unit through the processor unit.

### BRIEF DESCRIPTION OF THE FIGURES

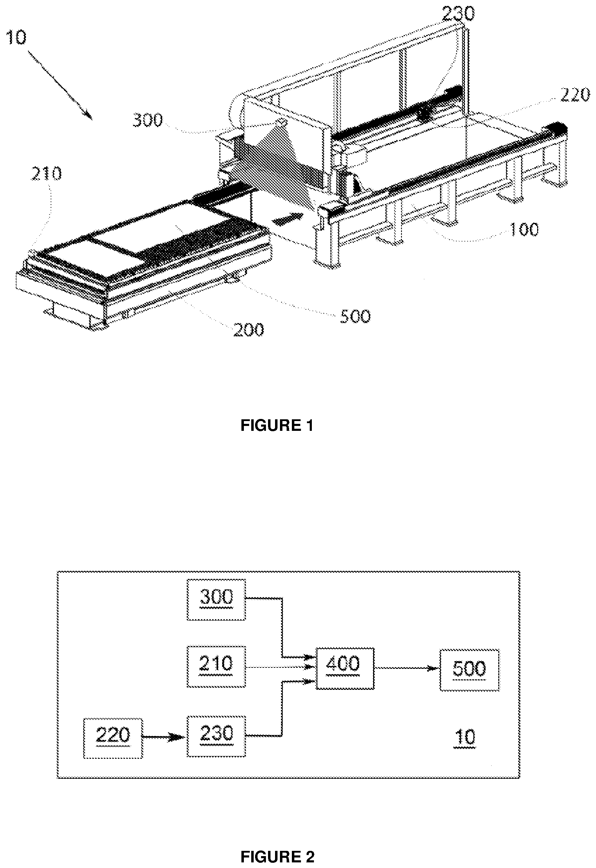

A representative view of the sheet processing machine is given in Figure 1.

A representative view of the operating scenario of the sheet processing machine is given in Figure 2.

### DETAILED DESCRIPTION OF THE INVENTION

The subject of the invention is explained with examples that do not have any limiting effect and provided only for a better understanding of the subject in this detailed description.

The present invention relates to a sheet processing machine designed with an innovative architecture to enable cutting of a sheet plate.

Said sheet processing machine (10) comprises a body (100) for processing said sheet plate (500) as shown in Figure 1. There is a loading pallet (200) for transporting into the body (100) the sheet plate (500) placed on it in connection with said body (100). There is a drive element (220) provided to the body (100) to provide the movement of said loading pallet (200). A motor etc. is used as said drive element (220) in a possible embodiment of the invention. The drive element (220) is configured to allow the loading pallet (200) to move into the body (100). The drive element (220) comprises a motion sensor (230), which allows the position of the loading pallet (200) to be determined. An encoder provided to the drive element (220) is used as the motion sensor (230) in a possible embodiment of the invention. The loading pallet (200) has a reciprocating movement mechanism that is configured to allow the sheet plate (500) to be transported into the body (100). The loading pallet (200) is configured to allow the transport of a plurality of sheet plates (500) on it. There is a reference element (210) provided to at least one corner of said loading pallet (200). Said reference element (210) is an object-like structure provided to enable the position of the sheet plate (500) on the loading pallet (200) to be determined. There is a processing head that allows the sheet plate (500) on the loading pallet (200) to be processed in the body (100). Said processing head is directed to the sheet plate (500) and the cutting process of the sheet plate (500) is performed.

There is a sensor unit (300) positioned on the body (100) to allow the sheet plate (500) on the loading pallet (200) to be scanned superficially during its passage into the body (100) as shown in Figure 1. The sensor unit (300) is positioned to enable the loading pallet (200) to be scanned to the outer surface of the body (100) in a possible embodiment of the invention. Said sensor unit (300) comprises at least one image sensor. At least one camera is used to obtain the image as the image sensor mentioned in a possible embodiment of the invention. The sensor unit (300) further comprises at least one laser distance measurement sensor. At least one of the image sensor and the laser distance measurement sensor is used as the sensor unit (300) in a possible embodiment of the invention. The position, lateral length, angle and height of the sheet plate (500) on the loading pallet (200) are determined by superficial scanning by means of the image sensor or the laser distance measurement sensor. It is ensured by instantaneously scanning the loading pallet (200) through the sensor unit (300) that the perforated or non-perforated sections on the loading pallet (200) are detected. It is determined from the collected data that the non-perforated smooth parts are the sheet plate (500) and the perforated and rough parts are the surface of the loading pallet (200). The lateral length, height, coordinates and angle of the sheet plate (500) or plates on the loading pallet (200) are determined by instantaneous superficial scanning in this case. A least one of the data obtained as a result of calculating the position information of the loading pallet through the reference element (210) or measuring the position information of the loading pallet (200) through the motion sensor (230) is obtained and the length of the sheet plate (500) is determined. Thus, data on the sheet plate (500) are received from at least one of the motion sensor (230) and the reference element (210) provided in addition to the sensor unit (300). There is a processor unit (400) configured to receive data from the sensor unit (300), the motion sensor (230) and the reference element (210).

The sheet plate (500) on the loading pallet (200) is transported into the body (100) for cutting by operating the drive element (220) as shown in Figure 2. A position data containing the position information of the loading pallet (200) is transmitted to the processor unit (400) through the encoder provided to the drive element (220) by operating the drive element (220). The top of the loading pallet (200) is scanned during its passage into the body (100) through the sensor unit (300). The data obtained as a result of the scanning is transmitted to the processor unit (400). The images taken by superficially scanning the loading pallet (200) are interpreted with the image processing algorithm if the sensor unit (300) is an image sensor. The position, angle and dimensions of the sheet plate (500) on the loading pallet (200) are determined from the interpreted images. If the sensor unit (300) is a laser distance measurement sensor, the position, angle and dimensions of the sheet plate (500) on the loading pallet (200) can be determined by detecting the perforated surface of the loading pallet (200) and the smooth surface of the sheet plate (500). A visual is created according to the presence or absence data obtained from the signals sent to the loading pallet (200). The created visual includes the coordinates, angles and dimensions of the sheet plate (500) on loading pallet (200). The processor unit (400) also allows the position information of the loading pallet (200) to be calculated according to the reference element (210) provided on the loading pallet (200).

The processor unit (400) provides the data received from the sensor unit (300) and from reference element (210) or the motion sensor (230) in addition to the sensor unit (300) as input to the predefined artificial intelligence models. The processor unit (400) determines the aspect ratio, the angle of curvature of the sheet plate (500), and the coordinates, dimensions to be cut on the sheet plate (500) are determined as a result of said process. The processing head is operated according to the detected data and the cutting process is carried out in the body (100).

An exemplary operating scenario of the invention is described below;

A sheet plate (500) is placed on the loading pallet (200). The drive element (220) is operated upon completion of the placement process. The drive element (220) allows the movement of the loading pallet (200) and allows the sheet plate (500) placed on the loading pallet (200) to be transported to the body (100). The position data is transmitted to the processor unit (400) instantly from the encoder on it by operating the drive element (220). The real-time images of the loading pallet (200) is taken by means of the image sensor provided on the outer face of the body (100). The images taken through the image sensor are instantly transmitted to the processor unit (400). The processor unit (400) enables the interpretation of the images taken from the image sensor with the image processing algorithm. The number, dimensions and positions of the sheet plate (500) on the loading pallet (200) are determined through the interpreted images. The loading pallet (200) is scanned superficially by means of the laser distance measurement sensor provided on the body (100). The position, size and angle information of the sheet plate (500) on the loading pallet (200) are determined according to the scanning status taken from the laser distance measurement sensor. The processor unit (400) also allows the position data to be calculated instantly according to the reference element (210) provided to the loading pallet (200). The information received from the motion sensor (230) or the reference element (210) is received to ensure that the data detected by the sensor is checked or completed. With the processor unit (400), the data received from the sensor unit (300) and the reference element (210) or the motion sensor (230) in addition to the sensor unit (300) by using the predefined artificial intelligence algorithm is controlled.

The processor unit enables the determination of the coordinates and dimensions for the cutting process according to the position of the sheet plate (500) with the artificial intelligence algorithm. The processing head is operated according to the detected data. The processing head allows the predetermined data to be processed on the sheet plate (500) with the determined coordinates and dimensions. Thus, the cutting process is performed to the full extent on the sheet plate (500) according to the determined reference values.

A camera is placed in the upper position of a laser CNC machine facing the loading pallet (200) in a facility in an exemplary embodiment of the invention. There is a reference element (210) in the right corner of the loading pallet (200) away from the CNC machine. Said reference element (210) helps to determine the positions of the sheet plates (500) placed on the loading pallet (200). The sheet plate (500) is placed on the loading pallet (200) in two different positions. The loading pallet (200) is moved into the CNC machine by placing the sheet plates (500). The image of the loading pallet (200) is taken instantly from the camera positioned to outside the CNC machine in a way to face the loading pallet. The images taken are transmitted to the processor unit (400). The processor unit (400) allows the position and measures of the sheet plates (500) on the loading pallet (200) to be determined by processing the received images. The position data of the loading pallet is calculated according to the reference element (210) on the loading pallet (200). The processor unit (400) enables the analysis of the data received from the camera and the reference element (210). The number, the position on the loading pallet (200), the measures and the angles of curvature of sheet plates (500), are determined as a result of the analysis. The positions and dimensions to be cut on the sheet plates (500) are determined by using the artificial intelligence algorithm through the processor unit (400) according to the determined data. The axes are operated in order to perform the laser cutting process at the determined coordinates on the sheet plates (500) with the sheet plates (500) entering into the CNC machine. Thus, the laser cutting process is performed on the sheet plates (500) at the determined location and dimensions.

The scope of protection of the invention is specified in the attached claims and cannot be limited to those explained for illustration purposes in this detailed description. It is evident that a person skilled in the art may exhibit similar embodiments in light of above-mentioned without departing from the scope of the present invention as defined in the appended claims.

### REFERENCE NUMBERS GIVEN IN THE FIGURE

10 Sheet Processing Machine
100 Body
200 Loading Pallet
   210 Reference Element
   220 Drive Element
   230 Motion Sensor
300 Sensor Unit
400 Processor Unit
500 Sheet Plate

## Claims

1. A sheet processing machine (10) comprising a body (100) for processing a sheet plate (500), a loading pallet (200) for transporting into the body (100) said sheet plate (500) placed on it in connection with said body (100), a processing head for ensuring that the sheet plate (500) on said loading pallet (200) is processed in the body (100) **characterized in that** it comprises at least one sensor unit (300) placed on the body (100) to ensure the superficial scanning of the sheet plate (500) on the loading pallet (200), a processor unit (400) configured to receive data from said sensor unit (300); the processor unit (400) is configured to enable the superficial scanning of the sheet plate (500) positioned on the loading pallet (200) during its passage into the body (100) by means of the sensor unit (300); to enable the analysis of the superficial scanning data received from the sensor unit (300); as a result of the analysis, to enable the determination of the coordinate information of the position of the sheet plate (500) on the loading pallet (200), angle information and the dimensions of the sheet plate (500).

2. A sheet processing machine (10) according to claim 1, **characterized in that** the sensor unit (300) comprises at least one image sensor.

3. A sheet processing machine (10) according to claim 1, **characterized in that** the sensor unit (300) comprises at least one laser distance measurement sensor.

4. A sheet processing machine (10) according to claim 1, **characterized in that** it comprises a drive element (220) that controls the movement of the loading pallet (200).

5. A sheet processing machine (10) according to claim 5, **characterized in that** the processor unit (400) is configured to receive the position data of the loading pallet (200) from a motion sensor (230) to said drive element (220).

6. A sheet processing machine (10) according to claim 1, **characterized in that** the processor unit (400) is configured to calculate a position data according to a reference element (210) provided on the loading pallet (200) to enable the position of the sheet plate (500) on the loading pallet (200) to be determined.

7. A sheet processing method to be implemented in a sheet processing machine (10), the method is **caracterized in that** it performs the following processing steps:
- Providing a sheet processing machine according to claim 1,
- Placing at least one sheet plate (500) on the loading pallet (200),
- Transporting the sheet plate (500) into the body (100) by the loading pallet (200) through the drive element (220),
- Superficial scanning the sheet on the loading pallet during its passage into the body (100) by means of the sensor unit (300),
- Determining the lateral length, height of the sheet plate (500) and its position, angle on the sheet plate (500) during superficial scanning,
- Receiving a position data including the lateral length, height and position, angle of the sheet plate (500) on the loading pallet (200) from the sensor unit (300) through the processor unit (400),
- Analyzing said position data received from the sensor unit (300) through the processor unit (400),
- Determining the position to be processed on the sheet plate (500) according to the result of the analysis.

8. A sheet processing method in a sheet processing machine (10) according to claim 7 **characterized in that** it comprises the step of receiving vertical position data on the loading pallet (200) of the sheet plate (500) from the motion sensor (230) through the processor unit (400) between the step of receiving a position data including the lateral length, height and position, angle of the sheet plate (500) on the loading pallet (200) from the sensor unit (300) through the processor unit (400) and the step of analyzing said position data received from the sensor unit (300) through the processor unit (400).

9. A sheet processing method in a sheet processing machine (10) according to claim 7 **characterized in that** it comprises the step of calculating the vertical position data of the sheet plate (500) on the loading pallet (200) according to the reference element (210) through the processor unit (400) between the step of receiving a position data including the lateral length, height and position, angle of the sheet plate (500) on the loading pallet (200) from the sensor unit (300) through the processor unit (400) and the step of analyzing said position data received from the sensor unit (300) through the processor unit (400).

## Patentansprüche

1. Blechverarbeitungsmaschine (10), die einen Körper (100) zum Verarbeiten einer Blechplatte (500), eine Ladepalette (200) zum Transportieren der Blechplatte (500), die auf ihr in Verbindung mit dem Körper (100) angeordnet ist, in den Körper (100), einen Verarbeitungskopf, der sicherstellt, dass die Blechplatte (500) auf der Ladepalette (200) in dem Körper (100) verarbeitet wird, umfasst, **dadurch gekennzeichnet, dass** sie mindestens eine Sensoreinheit (300) umfasst, die auf dem Körper (100) angeordnet ist, um die oberflächliche Abtastung der Blechplatte (500) auf der Ladepalette (200) zu gewährleisten, sowie eine Prozessoreinheit (400), die so konfiguriert ist, dass sie Daten von der Sensoreinheit (300) empfängt; wobei die Prozessoreinheit (400) so konfiguriert ist, dass sie die oberflächliche Abtastung der auf der Ladepalette (200) positionierten Blechplatte (500) während ihres Durchgangs in den Körper (100) mit Hilfe der Sensoreinheit (300) ermöglicht; die Analyse der von der Sensoreinheit (300) empfangenen oberflächlichen Abtastungsdaten zu ermöglichen; als Ergebnis der Analyse die Bestimmung der Koordinateninformationen der Position der Blechplatte (500) auf der Ladepalette (200), der Winkelinformationen und der Abmessungen der Blechplatte (500) zu ermöglichen.

2. Blechverarbeitungsmaschine (10) nach Anspruch 1, **dadurch gekennzeichnet, dass** die Sensoreinheit (300) mindestens einen Bildsensor umfasst.

3. Blechverarbeitungsmaschine (10) nach Anspruch 1, **dadurch gekennzeichnet, dass** die Sensoreinheit (300) mindestens einen Laser-Abstandsmessungssensor umfasst.

4. Blechverarbeitungsmaschine (10) nach Anspruch 1, **dadurch gekennzeichnet, dass** sie ein Antriebselement (220) umfasst, das die Bewegung der Ladepalette (200) steuert.

5. Blechverarbeitungsmaschine (10) nach Anspruch 5, **dadurch gekennzeichnet, dass** die Prozessoreinheit (400) so konfiguriert ist, dass sie die Positionsdaten der Ladepalette (200) von einem Bewegungssensor (230) zu dem Antriebselement (220) empfängt.

6. Blechverarbeitungsmaschine (10) nach Anspruch 1, **dadurch gekennzeichnet, dass** die Prozessoreinheit (400) so konfiguriert ist, dass sie Positionsdaten in Abhängigkeit von einem auf der Ladepalette (200) vorgesehenen Referenzelement (210) berechnet, um die Position der Blechplatte (500) auf der Ladepalette (200) bestimmen zu können.

7. Blechverarbeitungsverfahren, das in einer Blechverarbeitungsmaschine (10) zu implementieren ist, wobei das Verfahren **dadurch gekennzeichnet ist, dass** es die folgenden Verarbeitungsschritte durchführt:
- Bereitstellung einer Blechverarbeitungsmaschine nach Anspruch 1,
- Auflegen von mindestens einer Blechplatte (500) auf die Ladepalette (200),
- Transport der Blechplatte (500) in den Körper (100) durch die Ladepalette (200) über das Antriebselement (220),
- Oberflächliche Abtastung des Blechs auf der Ladepalette während des Durchlaufs durch den Körper (100) mit Hilfe der Sensoreinheit (300),
- Bestimmung der seitlichen Länge, der Höhe der Blechplatte (500) und ihrer Position, des Winkels auf der Blechplatte (500) während der oberflächlichen Abtastung,
- Empfangen von Positionsdaten, die die seitliche Länge, Höhe und Position sowie den Winkel der Blechplatte (500) auf der Ladepalette (200) umfassen, von der Sensoreinheit (300) über die Prozessoreinheit (400),
- Analysieren der von der Sensoreinheit (300) empfangenen Positionsdaten durch die Prozessoreinheit (400),
- Bestimmung der zu bearbeitenden Position auf der Blechplatte (500) entsprechend dem Ergebnis der Analyse.

8. Blechverarbeitungsverfahren in einer Blechverarbeitungsmaschine (10) nach Anspruch 7, **dadurch gekennzeichnet, dass** es den Schritt des Empfangens von vertikalen Positionsdaten der Blechplatte (500) auf der Ladepalette (200) von dem Bewegungssensor (230) durch die Prozessoreinheit (400) zwischen dem Schritt des Empfangens von Positionsdaten einschließlich der seitlichen Länge, Höhe und Position, des Winkels der Blechplatte (500) auf der Ladepalette (200) von der Sensoreinheit (300) durch die Prozessoreinheit (400) und dem Schritt des Analysierens der von der Sensoreinheit (300) durch die Prozessoreinheit (400) empfangenen Positionsdaten umfasst.

9. Blechverarbeitungsverfahren in einer Blechverarbeitungsmaschine (10) nach Anspruch 7, **dadurch gekennzeichnet, dass** es den Schritt des Berechnens der vertikalen Positionsdaten der Blechplatte (500) auf der Ladepalette (200) gemäß dem Referenzelement (210) durch die Prozessoreinheit (400) zwischen dem Schritt des Empfangens von Positionsdaten, die die seitliche Länge, Höhe und Position, den Winkel der Blechplatte (500) auf der Ladepalette (200) von der Sensoreinheit (300) durch die Prozessoreinheit (400) und den Schritt des Analysierens der von der Sensoreinheit (300) empfangenen Positionsdaten durch die Prozessoreinheit (400) umfasst.

## Revendications

1. Une machine de traitement de feuilles (10) comprenant un corps (100) pour traiter une plaque (500) en feuille, une palette de chargement (200) pour transporter dans le corps (100) ladite plaque (500) en feuille placée sur celle-ci en liaison avec ledit corps (100), une tête de traitement pour assurer que la plaque (500) en feuille sur ladite palette de chargement (200) soit traitée dans le corps (100), **caractérisée en ce qu'**elle comprend au moins une unité de capteur (300) placée sur le corps (100) pour assurer le balayage superficiel de la plaque (500) en feuille sur la palette de chargement (200), une unité de traitement (400) configurée pour recevoir des données provenant de ladite unité de capteur (300) ; l'unité de traitement (400) est configurée pour permettre le balayage superficiel de la plaque (500) positionnée sur la palette de chargement (200) lors de son passage dans le corps (100) au moyen de l'unité de capteur (300) ; pour permettre l'analyse des données de balayage superficiel reçues de l'unité de capteur (300) ; à la suite de l'analyse, permettre la détermination des informations de coordonnées de la position de la plaque (500) en feuille sur la palette de chargement (200), des informations d'angle et des dimensions de la plaque (500) en feuille.

2. Une machine de traitement de feuilles (10) selon la revendication 1, **caractérisée en ce que** l'unité de capteur (300) comprend au moins un capteur d'image.

3. Une machine de traitement de feuilles (10) selon la revendication 1, **caractérisée en ce que** l'unité de capteur (300) comprend au moins un capteur laser de mesure de distance.

4. Une machine de traitement de feuilles (10) selon la revendication 1, **caractérisée en ce qu'**elle comprend un élément d'entraînement (220) qui contrôle le mouvement de la palette de chargement (200).

5. Une machine de traitement de feuilles (10) selon la revendication 5, **caractérisée en ce que** l'unité de traitement (400) est configurée pour recevoir les données de position de la palette de chargement (200) provenant d'un capteur de mouvement (230) vers ledit élément d'entraînement (220).

6. Une machine de traitement de feuilles (10) selon la revendication 1, **caractérisée en ce que** l'unité de traitement (400) est configurée pour calculer des données de position en fonction d'un élément de référence (210) prévu sur la palette de chargement (200) afin de permettre la détermination de la position de la plaque (500) en feuille sur la palette de chargement (200).

7. Une méthode de traitement de feuilles à mettre en oeuvre dans une machine de traitement de feuilles (10), la méthode est **caractérisée en ce qu'**elle effectue les étapes de traitement suivantes :
- Fournir une machine de traitement de feuilles selon la revendication 1,
- Placer au moins une plaque (500) en feuille sur la palette de chargement (200),
- Transporter la plaque (500) en feuille dans le corps (100) par la palette de chargement (200) via l'élément d'entraînement (220),
- Balayer superficiellement la feuille sur la palette de chargement lors de son passage dans le corps (100) à l'aide de l'unité de capteur (300),
- Déterminer la longueur latérale, la hauteur de la plaque (500) et sa position, l'angle sur la plaque (500) pendant le balayage superficiel,
- Recevoir des données de position comprenant la longueur latérale, la hauteur et la position, l'angle de la plaque (500) sur la palette de chargement (200) provenant de l'unité de capteur (300) via l'unité de traitement (400),
- Analyser lesdites données de position reçues de l'unité de capteur (300) via l'unité de traitement (400),
- Déterminer la position à traiter sur la plaque (500) en fonction du résultat de l'analyse.

8. Une méthode de traitement de feuilles dans une machine de traitement de feuilles (10) selon la revendication 7, **caractérisée en ce qu'**elle comprend l'étape de réception des données de position verticale sur la palette de chargement (200) de la plaque (500) en feuille provenant du capteur de mouvement (230) via l'unité de traitement (400) entre l'étape de réception des données de position comprenant la longueur latérale, la hauteur et la position, l'angle de la plaque (500) en feuille sur la palette de chargement (200) à partir de l'unité de capteur (300) via l'unité de traitement (400) et l'étape de l'analyse desdites données de position reçues de l'unité de capteur (300) via l'unité de traitement (400).

9. Une méthode de traitement de feuilles dans une machine de traitement de feuilles (10) selon la revendication 7, **caractérisée en ce qu'**elle comprend l'étape de calcul des données de position verticale de la plaque (500) en feuille sur la palette de chargement (200) en fonction de l'élément de référence (210) via l'unité de traitement (400) entre l'étape de réception des données de position comprenant la longueur latérale, la hauteur et la position, l'angle de la plaque (500) en feuille sur la palette de chargement (200) provenant de l'unité de capteur (300) via l'unité de traitement (400) et l'étape de l'analyse desdites données de position reçues de l'unité de capteur (300) via l'unité de traitement (400).
